# EUROPEAN PATENT SPECIFICATION

(11) **EP 0 887 291 B1**
(45) Date of publication and mention of the grant of the patent: **21.11.2001**
(21) Application number: 97201908.7
(22) Date of filing: 26.06.1997
(51) Int. Cl.: B65G 33/00, B65G 33/14, B65G 33/18, B65G 33/32

(54) **A screw conveyor**
Schneckenförderer
Transporteur à vis

(43) Date of publication of application: 30.12.1998
(73) Proprietor: IDR HOLDING S.A., 2086 Luxembourg (LU)
(72) Inventor: Vincenzi, Lamberto, 41030 S. Prospero Sulla Secchia (Mo) (IT)
(74) Representative: Gotra, Stefano

(56) References cited:
- DE-C- 224 154
- US-A- 2 988 203
- US-A- 3 294 219

## Description

The invention relates to a screw conveyor, in particular a conveyor comprising a channel or pipe in which the material to be transported is moved by action of a continuous or discontinuous spiral.

Conveyors of this type are known, in which the screw spiral is wound about a shaft which is rotatable on suitable support means set at ends of the shaft itself.

Where the shaft of the screw is relatively long, intermediate support means thereof are necessary, having the task of limiting the radial oscillations of the shaft. The intermediate support means are usually composed of a bearing coupled to the spiral shaft and fixed by means of radial elements to the wall of the channel or pipe. In the coupling zone between the shaft and the bearing the spiral is necessarily interrupted, and the transporting capacity of the screw reduced, due both to the interruption in the screw and to the obstruction to the advancing of the material constituted by the bearing and the radial elements with the channel or pipe.

A solution to the above problem is described in publication patent EP 0521567.

Another solution is offered by US 3294219 describing a screw conveyor as in the preamble of claim 1.

The present invention offers a further solution to the same problem, by providing a screw conveyor which can function efficiently in an intermediate zone of the pipe close to which spiral shaft support means can be located.

An advantage of the invention is that it provides a relatively long screw conveyor which during functioning does not suffer from excessive radial oscillations.

A further advantage of the present invention is that it provides a screw conveyor having a relatively high load capacity.

Further advantages are that it is constructionally simple, economical and reliable.

These aims and advantages and more besides are all achieved by the present invention, as it is characterised in the claims that follow.

Further characteristics and advantages of the present invention will better emerge from the detailed description that follows of a preferred but non-exclusive embodiment of the invention, illustrated purely by way of nonlimiting example in the accompanying figures of the drawings, in which:
figure 1 shows a partial schematic vertical elevation of a first embodiment of the conveyor of the invention;
figure 2 is a section of an enlarged detail of figure 1;
figure 3 is a section made along line III-III of figure 1;
figure 4 is a section of a detail of a second embodiment of the invention.

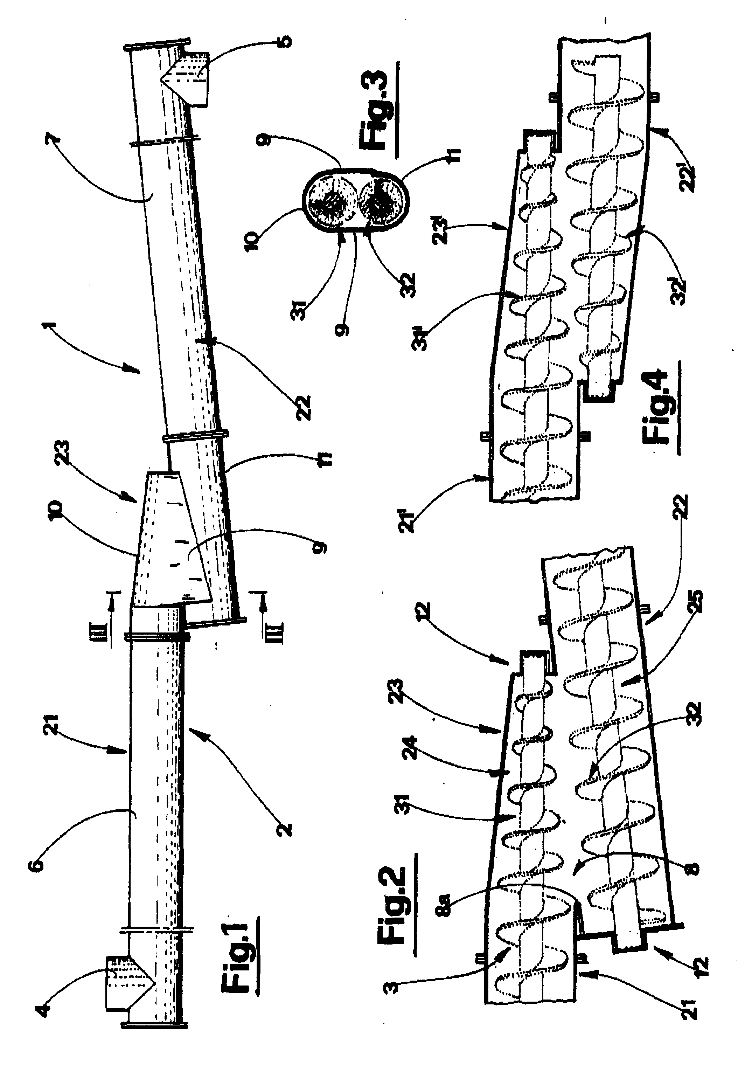

With reference to the above figures 1-3 of the drawings, 1 denotes in its entirety a screw conveyor which is particularly suitable for transport of powdery and/or granular materials. The screw conveyor 1 comprises a conduit 2 internally of which a spiral 3 is rotatably mounted.

The conduit 2 exhibits an inlet 4 and an outlet 5 for the material to be transported. The screw conveyor I is, in the present example, of the horizontal-axis type, though the invention may be applied to other types of screw conveyor, for example one with a vertical or strongly inclined axis or with an oblique axis inclined in any way, according to the relative position of the starting and arrival points for the transport of the material.

The conduit 2 is subdivided into two conduit parts, in which the first part 21 includes the material inlet 4 and the second part 22 the outlet 5. The two parts of conduit 21 and 22 are constituted prevalently by two cylindrical pipes, denoted respectively by 6 and 7, slightly unaligned and of about the same diameter and length. The second part 22 of the conduit is arranged to follow the first part 21 (downstream with reference to the advancement direction of the material from the inlet 4 to the outlet 5). There is an intermediate zone in the conduit, indicated by 23, where the two parts 21 and 22 of the conduit meet and present two ends 24 and 25 situated side-by-side, or in the present case, one above the other. In this intermediate zone 23 the two conduit parts 21 and 22 communicate through an opening 8 for the passage of the material to be conveyed, situated between the two above-mentioned ends 24 and 25. In the illustrated example, which refers to a horizontal-axis screw conveyor, the terminal end 24 of the first conduit part 21 is situated above the first end 25 of the second conduit part 22, such that the passage of the material from one part of the conduit to the other, which occurs in the superposing zone, is favoured by the effect of the force of gravity.

In the intermediate zone 23, where the two conduit parts meet, two flat lateral connection walls 9 are arranged, situated one on either side of the conduit. The lateral walls 9 are conformed and arranged such as to connect the walls delimiting the final end 24 of the first part of the conduit and the first end 25 of the second part of the conduit. The distance between the walls 9 defines the breadth of the passage opening 8 which connects the two parts of the conduit 21 and 22.

In the illustrated example the wall superiorly delimiting the end 24 of the first part of conduit, at the intermediate connection zone 23, is truncoconical in shape with a decreasing diameter in the same direction as that of the material advancement.

The longitudinal axis of the second part of conduit 22 is inclined with respect to the axis of the first part 21, by an angle equal to the taper of the above-mentioned truncoconical wall, as can be seen in figures 1 and 2.

The spiral 3, like the conduit 2, is in two sections, in which a first spiral 31 is internal and coaxial to the first part 21 of the conduit and a second spiral 32 is internal and coaxial to the second part of conduit 22. Both spirals 31 and 32 are supported at their respective ends by known-type support means 12 shown schematically in figure 2.

The two spiral parts 31 and 32 exhibit respective end sections, situated side-by-side, between which the passage opening 8 is located.. The end section of the first spiral 31 has a decreasing diameter due to the truncoconical shape of the upper part of the conduit 21 in the intermediate zone 23. This final section of the first spiral (upstream) 31 and relative conduit 21 is distinguished by the fact that it is conformed and sized so as to convey a progressively decreasing load of material.

In a further embodiment of the invention, not illustrated herein, the upstream spiral, at the zone where it is superposed on the first part of the downstream propeller, can have a constant diameter and decreasing pitch.

It is important to the invention that in the intermediate connection zone between the two parts of conduit the structure of the upstream spiral and relative conduit part be suitable for a decreasing material load. This form of realization favours the passage of the transported material from the first to the second part of conduit through the opening in the intermediate connection zone,

The passage opening 8 is of about the same length as the section of the first spiral 31 with decreasing diameter and starts at the start of that section. In other words, the passage opening 8 exhibits an edge of end 8a on substantially the same plane, normal to the axis of the first spiral 31, as that at which the diameter of the section of the first spiral 31 begins to decrease.

Both the first and the second spirals 31 and 32 are provided with motors, of known type and not illustrated, which drive them in their rotation,

The second spiral 32, associated to the second part of conduit 22, exhibits, like the conduit 22, a slightly inclined axis with respect to the axis of the first spiral 31. The end section of the second spiral 32 (downstream) is conformed and sized for a non-decreasing load of transported material. in the example in figure 2 this end section has a constant diameter and pitch, and can therefore carry a constant load.

In figure 4, in the intermediate connection zone 23' the end section of the second spiral 32' is truncoconical with increasing diameter and therefore will take an increasing load. In this case the axes of the two spirals 31' and 32' and the relative two parts of conduit 21' and 22' are parallel.

In use preferably the second spiral 32, 32' will rotate at the same or at a slightly greater speed than the first 31, 31'.

During functioning, when the material which is introduced through the inlet 4 and which advances in the first part of conduit 21 reaches the intermediate connection zone 23, it is forced to pass into the second part of conduit 22, where it proceeds up to the outlet 5 drawn by the second part of the conveyor.

The screw conveyor 1 of the invention is able to transport material over a relatively long distance, and very efficiently throughout. In particular, the screw's ability to transport in the intermediate zone 23 is substantially the same as its ability to transport throughout the rest of the conveyor 1.

The material transported meets no support elements on the conveyor shaft which might obstruct its progress.

Further, the screw conveyor of the invention has no problems connected with excessive radial oscillations of the spiral support shaft. The two spirals are fixed and wound on to two different shafts, of relatively contained length, each of which is coupled at its opposite ends to appropriate support elements. The distance between the two supports of a shaft is about equal to half the distance between the inlet and the outlet of the conduit and is such as to allow only limited shaft radial oscillations.

The passage of the material from the first to the second part of the conduit occurs both due to gravity and, especially, by effect of the first spiral. It has indeed been established that a considerable efficiency of transport in the intermediate connection zone is obtained for vertical conveyors, too, where the weight of the material does not contribute to the passage from the first to the second part of the conduit.

In other embodiments, not illustrated, the screw conveyor can comprise more than two parts of conduit connected in series one after another, in which the first part exhibits the inlet for the material to be transported and the last part exhibits the outlet, and in which between one part of conduit and another there is an intermediate connection zone made as the present invention suggests.

## Claims

1. A screw conveyor, comprising:
a conduit (2) having an inlet (4) and an outlet (5) for material to be transported, and comprising at least a first part of conduit (21) (21'), and a second part of conduit (22, 22');
a first spiral (31, 31') rotatable internally of the first part of conduit (21), (21');
a second spiral (32, 32') rotatable internally of the second part of conduit (22), (22');
the first and second parts of conduit (21, 22; 21', 22') being intercommunicating at an intermediate zone (23, 23') of the conduit (2), at which intermediate zone the material being transported can pass from the first part (21, 21') to the second part (22, 22') of the conduit through a passage opening (8), and at which intermediate zone said first and second spirals (31, 32; 31', 32') exhibit respective end sections set side-by-side; two lateral walls (9) being arranged to connect up walls delimiting said two parts of conduit (21, 22) in said intermediate zone (23);
**characterised in that** said end section of said first spiral (31, 31') **is** conformed and sized so as to carry a progressively decreasing load of material.

2. The conveyor of claim 1, **characterised in that** the end section of the first spiral (31, 31') exhibits a decreasing diameter and a constant pitch.

3. The conveyor of claim 1 or 2, **characterised in that** said end section of the second spiral (32) exhibits constant diameter and pitch and the second spiral (32) exhibits a slightly inclined axis with respect to an axis of the first spiral (31).

4. The conveyor of claim 1 or 2, **characterised in that** said end section of the second spiral (32') exhibits a progressively increasing diameter and a constant pitch.

5. The conveyor of any one of the preceding claims, **characterised in that** said passage opening (8) has an end edge (8a) situated at a start of said end section of said first spiral (31).

## Patentansprüche

1. Schneckenförderer, enthaltend:
- einen Leitkanal (2) mit einem Einlass (4) und einem Auslass (5) für das zu transportierende Material, sowie enthaltend wenigstens einen ersten Teil (21, 21') des Leitkanals und einen zweiten Teil (22, 22') des Leitkanals;
- eine erste Schnecke (31, 31'), die drehbar im Inneren des ersten Teils (21, 21') des Leitkanals angeordnet ist;
- eine zweite Schnecke (32, 32'), die drehbar im Inneren des zweiten Teils (22, 22') des Leitkanals angeordnet ist; wobei die ersten und die zweiten Teile (21, 22; 21', 22') des Leitkanals in einem mittleren Bereich (23, 23') des Leitkanals (2) miteinander in Verbindung stehen, in welchem mittleren Bereich das geförderte Material aus dem ersten Teil (21, 21') in den zweiten Teil (22, 22') des Leitkanals übergehen kann, und zwar durch eine Durchlassöffnung (8), und in welchem mittleren Bereich die genannten ersten und zweiten Schnecken (31, 32; 31', 32') jeweils Seite an Seite angeordnete Endabschnitte aufweisen; und wobei zwei Seitenwände (9) so angeordnet sind, dass sie die Wände miteinander verbinden, welche die genannten beiden Teile (21, 22) des Leitkanals in dem genannten mittleren Bereich (23) eingrenzen;
**dadurch gekennzeichnet, dass** der genannte Endabschnitt der genannten ersten Schnecke (31, 31') so ausgebildet und bemessen ist, dass er eine allmählich abnehmende Ladung von Material fördert.

2. Förderer nach Patentanspruch 1, **dadurch gekennzeichnet, dass** der Endabschnitt der ersten Schnecke (31, 31') einen abnehmenden Durchmesser und eine konstante Steigung aufweisen.

3. Förder nach Patentanspruch 1 oder 2, **dadurch gekennzeichnet, dass** der genannte Endabschnitt der zweiten Schnecke (32) einen gleichbleibenden Durchmesser und eine konstante Steigung aufweist, und dass die zweite Schnecke (32) im Verhältnis zu der Achse der ersten Schnecke (31) eine leicht geneigte Achse zeigt.

4. Förderer nach Patentanspruch 1 oder 2, **dadurch gekennzeichnet, dass** der genannte Endabschnitt der zweiten Schnecke (32') einen allmählich zunehmenden Durchmesser und eine konstante Steigung aufweist.

5. Förderer nach einem beliebigen der vorstehenden Patentansprüche, **dadurch gekennzeichnet, dass** die genannte Durchlassöffnung (8) eine Kante (8a) aufweist, die an dem Anfang des genannten Endabschnittes der genannten ersten Schnecke (31) angeordnet ist.

## Revendications

1. Un transporteur à vis, comprenant:
un conduit (2) ayant une entrée (4) et une sortie (5) pour le matériau devant être transporté et comprenant au moins une première partie de conduit (21, 21') et
une seconde partie de conduit (22, 22'); une première vis (31, 31') pivotant à l'intérieur de la première partie de conduit (21, 21'); une seconde vis (32, 32') pivotant à l'intérieur de la seconde partie de conduit (22, 22');
la première et la seconde partie de conduit (21, 22; 21', 22') étant intercommunicante en une zone intermédiaire (23, 23') du conduit (2), dans laquelle le matériau étant transporté peut passer de la première partie (21, 21') à la seconde partie (22, 22') de conduit au travers d'une ouverture de passage (8), et dans laquelle lesdites première et seconde vis (31, 32; 31', 32') présentent leurs respectives zones d'extrémité disposées côte à côte;
deux parois latérales (9) étant disposées pour relier entre elles les parois délimitant lesdites deux parties de conduit (21, 22) dans ladite zone intermédiaire (23);
**caractérisé en ce que** ladite zone d'extrémité de ladite première vis (31, 31') est conformée et dimensionnée de manière à transporter une charge de matériau progressivement décroissante.

2. Le convoyeur selon la revendication 1, **caractérisé en ce que** la zone d'extrémité de la première vis (31, 31') présente un diamètre décroissant et un pas constant.

3. Le convoyeur selon la revendication 1 ou 2, **caractérisé en ce que** ladite zone d'extrémité de la seconde vis (32) présente un diamètre et un pas constants et **en ce que** la seconde vis (32) présente un axe légèrement incliné par rapport à l'axe de la première vis (31).

4. Le convoyeur selon la revendication 1 ou 2, **caractérisé en ce que** ladite zone d'extrémité de la seconde vis (32') présente un diamètre progressivement croissant et un pas constant.

5. Le convoyeur selon n'importe laquelle des revendications précédentes,
**caractérisé en ce que** ladite ouverture de passage (8) présente un bord d'extrémité (8a) situé en correspondance du début de ladite zone d'extrémité de ladite première vis (31).
